**Europäisches Patentamt**

**European Patent Office**

**Office européen des brevets**

(11) Veröffentlichungsnummer: **0 462 414 A1**

(12) # EUROPÄISCHE PATENTANMELDUNG

(21) Anmeldenummer: **91108357.4**

(22) Anmeldetag: **23.05.91**

(51) Int. Cl.5: **F16D 25/14, B60K 23/02**

(30) Priorität: **23.05.90 HU 314890**

(43) Veröffentlichungstag der Anmeldung:
**27.12.91 Patentblatt 91/52**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Simonyi, Sándor, Dr. Dipl.-Ing.**
**Baglyasalja, Petöfi u.59**
**H-3102 Salg tarján(HU)**
Erfinder: **Vál czi, György, Dipl.-Ing.**
**Budapesti ut. 40**
**H-3104 Salg tarján(HU)**

(74) Vertreter: **Patentanwälte Viering & Jentschura**
**Steinsdorfstrasse 6 Postfach 22 14 43**
**W-8000 München 22(DE)**

(54) **Verfahren zur halbautomatischen oder automatischen Kupplungsbetätigung in Kraftfahrzeugen.**

(57) Verfahren zur halbautomatischen oder automatischen Kupplungsbetätigung in Kraftfahrzeugen, deren Räder von einem verbrennungsmotor über die Reibkupplung, ein mechanisches Synchrongetriebe, und ein Differentialwerk angetrieben werden, die Drehzahl des Motors in Abhägigkeit von der Stellung des Gaspedals geregelt wird und das Drehzahlsignal des Motors und das Gaspedalstellungssignal kontinuierlich erzeugt wird. Die Kupplung wird beim Auskuppeln schnell gelöst und beim Einkuppeln bei eingeschalteter Anfangsgangstufe des Getriebes bis zu einer Motordrehzahl, die dem 1,1-1,3fachen der Leerlaufdrehzahl entspricht, schnell eingekuppelt und bei demgegenüber entsprechend der Stellung des Gaspedals höheren Motordrehzahlen mit einer zu dem Wert des Gaspedalsignals und damit zur Motordrehzahl proportionalen Einkuppelgeschwindigkeit eingekuppelt. Zu Beginn des Anfahrens des Kraftfahrzeuges wird ein Ist-Anfahrgaspedalsignal erzeugt und mit einem gespeicherten Anfangs-Anfahrgaspedalsignal verglichen, ein Soll-Einkuppelmotordrehzahlsignal wird aus einem gespeicherten Anfangs-Einkuppelmotordrehzahlsignal im Verhältnis zu dem Ist-Anfahrgaspedalsignal berechnet, und die Einkuppelgeschwindigkeit wird so gewählt, daß die Kupplung bei dem Vorliegen der Soll-Einkuppelmotor-drehzahl völlig eingerückt ist. Beim Schalten des Getriebes in eine höhere oder niedrigere Stufe werden die zu dem momentanen Gaspedalsignal vor dem Lösen der Kupplung und zu dem momentanen Motordrehzahlsignal gehörenden Drehmomentwerte aus gespeicherten Drehmomentfunktionen ermittelt und wird ein Belastungssignal durch das Vergleichen dieser Drehmomentwerte gebildet, wonach die Einrückgeschwindigkeit der Kupplung im umgekehrten Verhältnis zu dem Wert des Belastungssignals gewählt wird.

EP 0 462 414 A1

Die Erfindung betrifft ein Verfahren zur halbautomatischen oder automatischen Betätigung einer Reibkupplung eines Kraftfahrzeugs, wobei die Räder des Kraftfahrzeugs von einem Verbrennungsmotor über die Reibkupplung, ein mit Hand zu schaltendes oder automatisiertes mechanisches Synchrongetriebe, weiterhin über eine Kardanwelle und/oder direkt über ein Differentialwerk und über Radwellen angetrieben werden und die Drehzahl des Motors mit einem in Abhängigkeit von der Stellung des Gaspedals betätigten Einspritzventil oder Klappenventil geregelt wird.

Das Drehzahlsignal des Motors wird bei einem solchen Kraftfahrzeug mit einem Motordrehzahl-Signalgeber, und das Geschwindigkeitsdrehzahlsignal der Eingangswelle oder Ausgangswelle des Getriebes wird mit einem Geschwindigkeitsdrehzahlsignalgeber kontinuierlich erzeugt. Dies ist insbesondere wichtig, wenn das Kraftfahrzeug ein automatisches Wechselgetriebe aufweist, weil für das Schalten der Gangstufen die jeweiligen Drehzahlen als Istwerte für das Steuern des Schaltens des Wechselgetriebe dienen. Gegebenenfalls wird das an der Ausgangswelle erzeugte Geschwindigkeitsdrehzahlsignal mit dem Übersetzungsverhältnis der jeweilig eingeschalteten Gangstufe korrigiert.

Da das Verstellen des Gaspedals oder einer mit diesem in Betätigungsverbindung stehenden Konstruktionseinheit maßgeblich ist für die Steigerung der Motordrehzahl, wird auch ein das Verstellen des Gaspedals bzw. der genannten Konstruktionseinheit beschreibendes Gaspedalsignal mit einem Gaspedal-Signalgeber kontinuierlich erzeugt.

Zur automatischen oder halbautomatischen Betätigung der Reibkupplung beim Anfahren des Fahrzeuges und beim Schalten des Wechselgetriebes soll die Kupplung im allgemeinen schnell gelöst werden und mit einer Geschwindigkeit proportional zu der Steigerung der Motordrehzahl eingekuppelt werden, damit undefinierte Fahrtzustände beim Anfahren des Kraftfahrzeugs und bei und nach dem Schalten des Getriebes möglichst vermieden werden.

Hierbei kommt es jedoch insbesondere auch darauf an, die Einkuppelcharakteristik für das Anfahren des Kraftfahrzeuges und für die Getriebeschaltvorgänge an den jeweiligen Lastzustand des Kraftfahrzeugs und dessen Verbrennungsmotors anzupassen.

Durch die Erfindung wird eine solche Anpassung der Betätigungscharakteristik der Kupplung insbesondere beim Einkuppelvorgang nicht nur an die Motordrehzahl und die Stellung des Gaspedals, sondern auch an den jeweiligen Lastzustand des Motors und des Kraftfahrzeuges erreicht.

Zum Erreichen dieses Ziels wird gemäß der Erfindung nach dem Einschalten der Anfangsgangstufe, wenn die Motordrehzahl durch Niederdrücken des Gaspedals erhöht wird, die Kupplung bis zu dem Erscheinen des die 1,1-1,3fache Leerlaufdrehzahl beschreibenden Motordrehzahlsignals schnell eingekuppelt und danach wird die Einkuppelbewegung mit einer Geschwindigkeit proportional zu dem Wert des Gaspedalsignals fortgesetzt, wobei zu Beginn des Anfahrens (des Sichinbewegungsetzens) des Kraftfahrzeuges ein tatsächliches oder Ist-Anfangsgaspedalsignal erzeugt wird, dieses mit einem gespeicherten Anfangs-Anfahrgaspedalsignal verglichen wird und ein Soll-Einkuppelmotordrehzahlsignal aus einem gespeicherten Anfangs-Einkuppelmotordrehzahlsignal im Verhältnis des Ist-Anfangsgaspedalsignals im Vergleich mit dem gespeicherten Anfangs-Anfahrgaspedalsignal gebildet wird, wobei das Anfangs-Anfahrgaspedalsignal und das Anfangs-Einkuppelmotordrehzahlsignal sich auf einen definierten Lastzustand des Kraftfahrzeugs und des Motors als Bezugsgrößen beziehen und das Einkuppelmotordrehzahlsignal den Wert des Motordrehzahlsignals mit dem vollständigen Einrücken der Kupplung und daher mit dem Ende des Einkuppelvorgangs angibt. Nach dem Bestimmen der Soll-Einkuppelmotordrehzahl wird die Einkuppelgeschwindigkeit auf der Einkuppelstrecke zwischen der Ist-Anfangsmotordrehzahl und der Soll-Einkuppelmotordrehzahl entsprechend der Differenz zwischen der Ist-Anfangsmotordrehzahl und Soll-Einkuppelmotordrehzahl gewählt, so daß die Kupplung beim Erreichen der Sollmotordrehzahl völlig eingerückt ist. Ferner werden bei dem Schalten des Getriebes in eine höhere oder niedrigere Gangstufe die zu dem momentanen Gaspedalsignal vor dem Lösen der Kupplung und dem momentanen Motordrehzahlsignal gehörenden Drehmomentwerte des Motros aus gespeicherten Drehmomentfunktionen zwischen dem Motordrehmoment und dem Gaspedalsignal und dem Motordrehmoment und dem Motordrehzahlsignal ermittelt und wird ein Belastungssignal durch das Vergleichen dieser Drehmomentwerte gebildet. Die Einkuppelgeschwindigkeit wird sodann im umgekehrten Verhältnis zu dem Belastungssignal gewählt und eingesteuert.

Durch die Erfindung wird ein weiches, bedarfsgerechtes Einkuppeln der Reibkupplung des Kraftfahrzeuges auch in Abhängigkeit von dem jeweiligen Lastzustand des Kraftfahrzeugs und des Motors erreicht.

Das Anfangs-Anfahrgaspedalsignal sowie das Anfangs-Einkuppelmotordrehzahlsignal als Bezugsgrößen für die Einkuppelcharakteristik beim Einkuppeln der Reibkupplung für das Anfahren des Kraftfahrzeugs werden vorzugsweise auf einer ebenen Fahrstrecke in einem unbelasteten Zustand des Kraftfahrzeugs als dasjenige Anfahrgaspedalsignal, bei dem das gegebene Kraftfahrzeug beginnt, sich in Bewegung zu setzen, und dasjenige Anfahr-Einkuppelmotordrehzahlsignal ermittelt, bei dem die Kupplung bei dem Anfahrvorgang vollständig eingerückt ist; die Werte dieses Anfangs-Anfahrgaspedalsignals und dieses Anfangs-Einkuppelmotordrehzahlsignals werden für spätere Anfahrvorgänge gespeichert. Weiterhin werden bei der Fahrt auf ebener Fahrstrecke im unbelasteten Zustand des Fahrzeugs oder auf einem Prüfstand die Funktion zwischen dem Motordrehmoment und dem Gaspedalsignal und die Funktion zwischen dem Motordrehmoment und dem Motordrehzahlsignal bestimmt und diese Funktionen werden als Bezugsfunktionen für das Einkuppeln der Kupplung nach dem Schalten des Getriebes ebenfalls gespeichert.

**Patentansprüche**

1. Verfahren zur halbautomatischen oder automatischen Betätigung einer Reibkupplung eines Kraftfahrzeugs, dessen Räder von einem Verbrennungsmotor über die Reibkupplung, ein mit Hand zu schaltendes oder automatisiertes mechanisches Synchrongetriebe, eine Kardanwelle und/oder direkt über ein Differentialwerk und über Radwellen angetrieben werden, die Drehzahl des Motors mit einem mit dem Gaspedal betätigten Einspritzventil oder Klappenventil geregelt wird und das Drehzahlsignal des Motors mit einem Motordrehzahl-Signalgeber, und das das Verstellen des Gaspedals oder einer mit diesem in Betätigungsverbindung stehenden Konstruktionseinheit beschreibende Gaspedalsignal mit einem Gaspedal-Signalgeber kontinuierlich erzeugt wird, dadurch gekennzeichnet, daß die Kupplung beim Auskuppeln schnell gelöst und beim Einkuppeln bei eingeschalteter Anfangsgangstufe des Getriebes bis zu einer Motordrehzahl, die dem 1,1-1,3fachen der Leerlaufdrehzahl entspricht, schnell eingekuppelt wird und bei demgegenüber entsprechend der Stellung des Gaspedals höheren Motordrehzahlen mit einer zu dem Wert des Gaspedalsignals und damit zur Motordrehzahl proportionalen Einkuppelgeschwindigkeit eingekuppelt wird, wobei zu Beginn des Anfahrens des Kraftfahrzeuges ein Ist-Anfahrgaspedalsignal erzeugt wird und mit einem gespeicherten Anfangs-Anfahrgaspedalsignal verglichen wird, ein Soll-Einkuppelmotordrehzahlsignal aus einem gespeicherten Anfangs-Einkuppelmotordrehzahlsignal im Verhältnis zu dem Ist-Anfahrgaspedalsignal berechnet wird, die Einkuppelgeschwindigkeit auf der Einkuppelstrecke zwischen der zu Beginn des Anfahrens vorliegenden Ist-Anfangsmotordrehzahl und der Soll-Einkuppelmotordrehzahl entsprechend der Differenz zwischen der Ist-Anfangsmotordrehzahl und der Soll-Einkuppelmotordrehzahl gewählt wird, so daß die Kupplung bei dem Vorliegen der Soll-Einkuppelmotordrehzahl völlig eingerückt ist, und daß beim Schalten des Getriebes in eine höhere oder niedrigere Stufe die zu dem momentanen Gaspedalsignal vor dem Lösen der Kupplung und dem momentanen Motordrehzahlsignal gehörenden Drehmomentwerte aus gespeicherten Funktionen zwischen dem Motordrehmoment und dem Gaspedalsignal sowie zwischen dem Motordrehmoment und der Motordrehzahlsignal ausgesucht werden und ein Belastungssignal durch das vergleichen dieser Drehmomentwerte gebildet wird, und die Einrückgeschwindigkeit der Kupplung im umgekehrten Verhältnis zu dem Wert des Belastungssignals gewählt wird.

2. verfahren nach Anspruch 1, bei welchem als das Anfangs-Anfahrgaspedalsignal und das Anfangs-Einkuppelmotordrehzahlsignal auf einer ebenen Fahrstrecke im unbelasteten Zustand des Kraftfahrzeugs dasjenige Anfangsgaspedalsignal, bei dem das gegebene Kraftfahrzeug sich in Bewegung setzt, und dasjenige Einkuppelmotordrehzahlsignal gespeichert werden, bei dem die Kupplung vollständig eingerückt ist.

**Europäisches Patentamt**

# EUROPÄISCHER RECHERCHENBERICHT

Nummer der Anmeldung

**EP 91 10 8357**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 129 417 (FUJITSU ET AL.) <br> * Seite 7, Zeile 27 - Seite 8, Zeile 31; Figuren 6-9 * * Seite 11, Zeile 11 - Seite 12, Zeile 1; Figur 12 * <br> – – – | 1 | F 16 D 25/14 <br> B 60 K 23/02 |
| A | EP-A-0 251 733 (FUJI JUKOGYO) <br> * Spalte 1, Zeile 14 - Spalte 2, Zeile 17 * <br> – – – | 1 | |
| A | EP-A-0 130 792 (ISUZU MOTORS) <br> * Seite 18, Zeile 13 - Seite 24, Zeile 5; Figur 5 * <br> – – – | 1 | |
| A | DE-A-3 334 717 (WABCO WESTINGHOUSE) <br> * das ganze Dokument * <br> – – – | 1 | |
| A | DE-A-3 636 953 (DIESEL KIKI) <br> * Spalte 4, Zeile 14 - Spalte 7, Zeile 65; Figuren 1-3d * <br> – – – | 1 | |
| A | EP-A-0 189 050 (VDO) <br> * Zusammenfassung * <br> – – – – – | 1 | |

| | RECHERCHIERTE SACHGEBIETE (Int. Cl.5) |
|---|---|
| | B 60 K <br> F 16 D |

Der vorliegende Recherchenbericht wurde für alle Patentansprüche erstellt

| Recherchenort | Abschlußdatum der Recherche | Prüfer |
|---|---|---|
| Berlin | 20 September 91 | BROYDE M P |